# EUROPEAN PATENT SPECIFICATION

(11) **EP 2 825 824 B1**
(45) Date of publication and mention of the grant of the patent: **12.06.2019**
(21) Application number: 13760976.4
(22) Date of filing: 23.02.2013
(51) Int. Cl.: F23R 3/28, F23R 3/42, F02K 3/00, F02C 7/22, F02K 99/00, F23R 3/14

(54) **FUEL AIR PREMIXER FOR GAS TURBINE ENGINE**
KRAFTSTOFF-LUFT-VORMISCHER FÜR GASTURBINENMOTOR
DISPOSITIF DE PRÉMÉLANGE DE CARBURANT ET D'AIR POUR TURBINE À GAZ

(30) Priority: 12.03.2012 US 201213417380
(43) Date of publication of application: 21.01.2015
(73) Proprietor: United Technologies Corporation, Farmington, CT 06032 (US)
(72) Inventor: DAI, Zhongtao, Glastonbury Connecticut 06033 (US); COHEN, Jeffrey M., Hebron Connecticut 06248 (US); GREEN, Kevin E., Broad Brook Connecticut 06016 (US)
(74) Representative: Dehns
(86) International application number: PCT/US2013/027523
(87) International publication number: WO 2013/138050

(56) References cited:
- EP-A1- 2 481 982
- US-A- 5 675 971
- US-A- 6 141 967
- US-A1- 2002 178 732
- US-A1- 2008 229 753
- US-A1- 2010 251 719
- US-A1- 2011 089 262
- US-B1- 6 345 505

## Description

### BACKGROUND

The present disclosure relates to a gas turbine engine and, more particularly, to a fuel-air premixer therefor.

Gas turbine engines, such as those powering modern commercial and military aircraft, include a compressor for pressurizing an airflow, a combustor for burning a hydrocarbon fuel in the presence of the pressurized air, and a turbine for extracting energy from the resultant combustion gases. The combustor generally includes radially spaced inner and outer liners that define an annular combustion chamber therebetween. Arrays of circumferentially distributed combustion air holes penetrate multiple axial locations along each liner to radially admit the pressurized air into the combustion chamber. A plurality of circumferentially distributed fuel air premixer project into a forward section of the combustion chamber to supply fuel mixed with pressurized air.

Future gas turbine combustors may be required to meet aggressive emission requirements, particularly NOx. Combustor schemes under development to achieve these goals will require a high degree of fuel/air mixing prior to combustion. The high combustor inlet temperatures may thereby lead to short autoignition time scales such that the fuel/air mixing must occur in a very short time.

US 5675971 discloses a fuel-air premixer according to the preamble of claim 1. US 2011/089262 discloses a further mixer of the prior art.

### SUMMARY

In accordance with the invention, there is provided a fuel-air premixer for a combustor of a turbine engine as set forth in claim 1.

In a further embodiment of the above, the multiple of first swirl vanes and the multiple of second swirl vanes define respective chord directions C1 and C2 that are transverse to the axis and to each other.

In a further embodiment of any of the above, the multiple of fuel passages include respective fuel orifices that each extend in a radial direction.

In a further embodiment of any of the above, the fuel orifices are located downstream of the splitter plate.

In a further embodiment of any of the above, the fuel orifices are located downstream of the splitter plate at an axial distance greater than approximately five diameters of the fuel orifices.

In a further embodiment of any of the above, the swirler body is axially spaced from the central nozzle body.

A gas turbine engine according to one aspect of the present disclosure includes a compressor section, a combustor in fluid communication with the compressor section and a turbine section in fluid communication with the combustor. The combustor includes a fuel-air premixer as set forth above.

Also in accordance with the invention, there is provided a method of communicating fuel and air to a combustor of a turbine engine as set forth in claim 7.

A further embodiment of the above includes radially injecting the fuel outward relative to the axis into the turbulent region at a location approximately equivalent to a one-quarter auto-ignition time relative to an end of a swirler body.

A further embodiment of any of the above includes choking the unswirled airflow, the first swirled airflow and the second swirled airflow downstream of the turbulent region.

A further embodiment of any of the above includes providing essentially zero net swirl at an end of a swirler body that receives the unswirled airflow, the first swirled airflow and the second swirled airflow.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of a gas turbine engine;
Figure 2 is a perspective partial sectional view of an exemplary annular combustor that may be used with the gas turbine engine shown in Figure 1;
Figure 3 is a sectional view of a fuel air premixer; and
Figure 4 is a schematic view of a premixer length with respect to an auto-ignition time.

### DETAILED DESCRIPTION

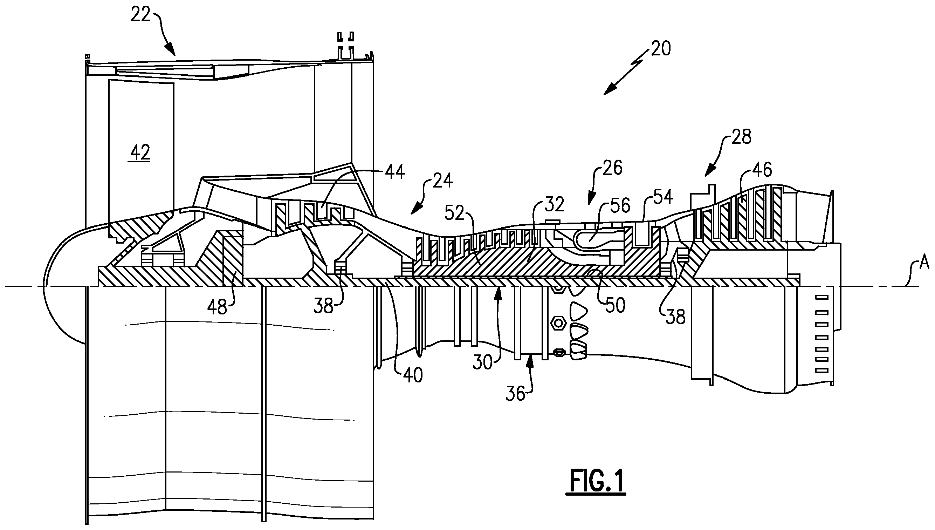

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines and land-based engines.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

The core airflow is compressed by the low pressure compressor 44 then the high pressure compressor 52, mixed and burned with fuel within the combustor 56, then expanded over the high pressure turbine 54 and low pressure turbine 46. The turbines 54, 46 rotationally drive the respective low speed spool 30 and high speed spool 32 in response to the expansion.

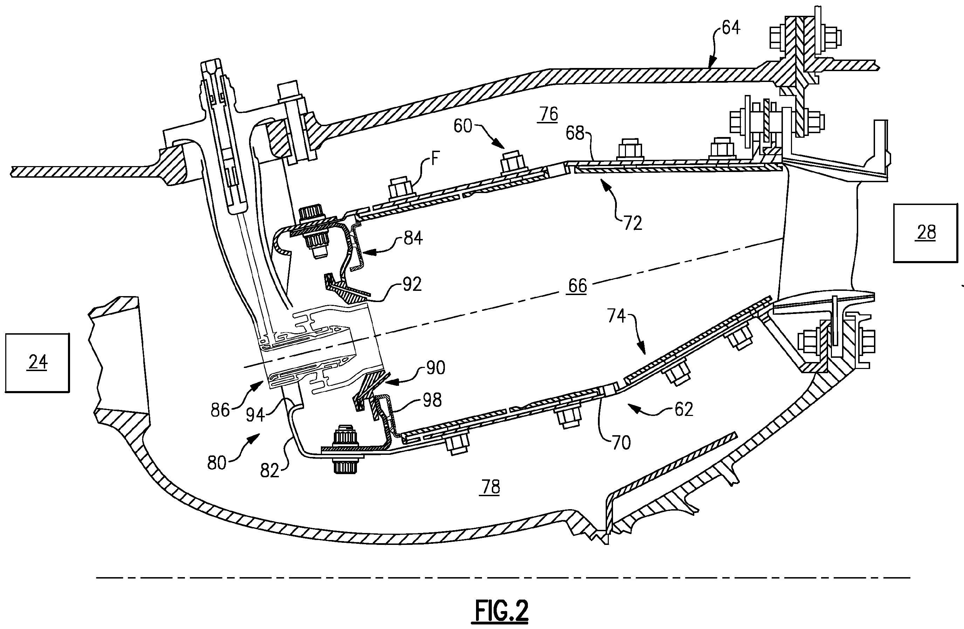

With reference to Figure 2, the combustor 56 generally includes an outer combustor liner 60 and an inner combustor liner 62. The outer combustor liner 60 and the inner combustor liner 62 are spaced inward from a combustor case 64 such that a combustion chamber 66 is defined there between. The combustion chamber 66 is generally annular in shape and is defined between combustor liners 60, 62.

The outer combustor liner 60 and the combustor case 64 define an outer annular plenum 76 and the inner combustor liner 62 and the combustor case 64 define an inner annular plenum 78. It should be understood that although a particular combustor is illustrated, other combustor types with various combustor liner panel arrangements will also benefit herefrom. It should be further understood that the disclosed cooling flow paths are but an illustrated embodiment and should not be limited only thereto.

The combustor liners 60, 62 contain the flame for direction toward the turbine section 28. Each combustor liner 60, 62 generally includes a support shell 68, 70 which supports one or more liner panels 72, 74 mounted to a hot side of the respective support shell 68, 70. The liner panels 72, 74 define a liner panel array which may be generally annular in shape. Each of the liner panels 72, 74 may be generally rectilinear and manufactured of, for example, a nickel based super alloy or ceramic material.

The combustor 56 further includes a forward assembly 80 immediately downstream of the compressor section 24 to receive compressed airflow therefrom. The forward assembly 80 generally includes an annular hood 82, a bulkhead assembly 84, a multiple of premixers 86 (one shown) and a multiple of fuel nozzle guides 90 (one shown) along an opening 92. In this example, the premixer 86 is shown at the forward assembly 80. It is to be understood, however, that the location and size of the premixers 86 can vary depending on the particular design of the combustor. Put another way, the size and number of premixers 86 can be varied from the illustrated example and one or more premixers 86 can additionally or alternatively be located through either or both of the support shells 68, 70.

The annular hood 82 extends radially between, and is secured to, the forwardmost ends of the liners 60, 62. The annular hood 82 includes a multiple of circumferentially distributed hood ports 94 that accommodate the respective fuel-air premixer 86 and introduce air into the forward end of the combustion chamber 66. Each fuel-air premixer 86 may be secured to the outer case 64 and projects through one of the hood ports 94 and through the opening 92 of the respective fuel nozzle guide 90. It should be understood that various additional or alternative structure may also be utilized.

Each of the fuel nozzle guides 90 is circumferentially aligned with one of the hood ports 94 to project through the bulkhead assembly 84. Each bulkhead assembly 84 includes a bulkhead support shell 96 secured to the liners 60, 62, and a multiple of circumferentially distributed bulkhead heat shield segments 98 secured to the bulkhead support shell 96 around the central opening 92.

The forward assembly 80 introduces primary core combustion air into the forward end of the combustion chamber 66 while the remainder enters the outer annular plenum 76 and the inner annular plenum 78. The multiple of premixers 86 and surrounding structure generate a swirling, intimately blended fuel-air mixture that supports combustion in the combustion chamber 66.

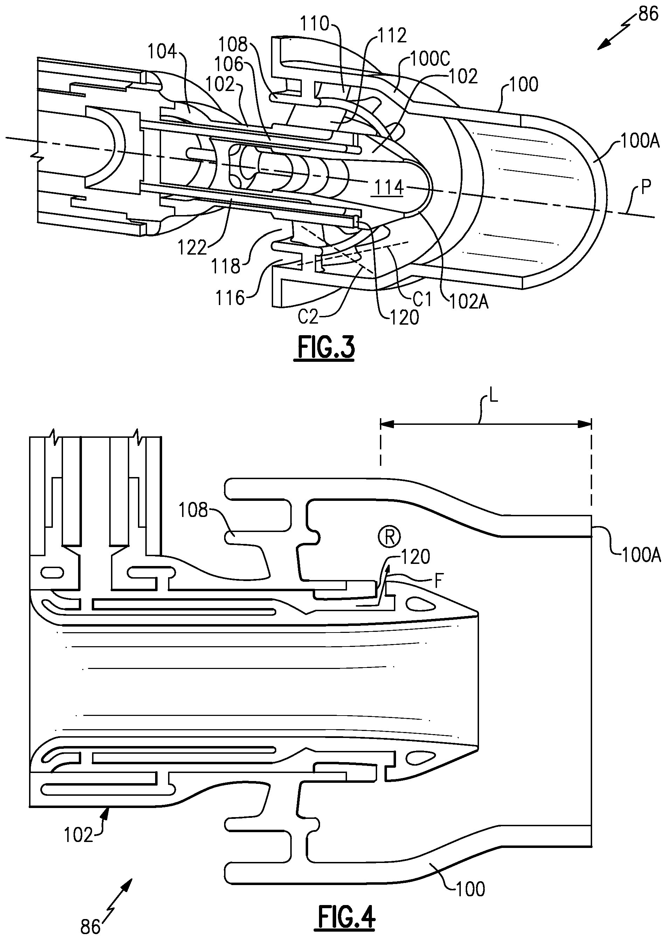

With reference to Figure 3, each of the multiple of fuel-air premixers 86 include a swirler body 100, a central nozzle body 102, a main nozzle body 104, a multiple of fuel conduits 106, a splitter plate 108, a multiple of first swirl vanes 110 and a multiple of second swirl vanes 112. The multiple of fuel conduits 106 extend between the central nozzle body 102 and the main nozzle body 104 to permit airflow into the central nozzle body 102. That is, the multiple of fuel conduits 106 are essentially tubes which are of minimal cross-sectional area so as to not block airflow thereby. The swirler body 100 includes a convergent section 100C that generally corresponds with a frustro-conical end 102A of the nozzle body 102 to maintain relatively high airflow velocities to prevent flashback. It should be appreciated that additional or alternative components may also be utilized.

A central passage 114 is defined along a premixer axis P within the central nozzle body 102. The central passage 114 facilitates the communication of unswirled airflow into the swirler body 100. An outer annular passage 116 is defined around the axis P between the swirler body 100 and the splitter plate 108. The multiple of first swirl vanes 110 extend between the swirler body 100 and the splitter plate 108 to facilitate the communication of a first swirled airflow into the swirler body 100. An inner annular passage 118 is defined around the axis P between the splitter plate 108 and the central nozzle body 102. The multiple of second swirl vanes 112 extend between the splitter plate 108 and the central nozzle body 102 to facilitate the communication of a second swirled airflow into the swirler body 100.

The multiple of first swirl vanes 110 and the multiple of second swirl vanes 112 define respective chord directions C1 and C2 (shown schematically) that are transverse to the axis P and to each other. The transverse orientation generates annular swirled airflows. In this example, the airflows generated by the first swirl vanes 110 and the second swirl vanes 112 have component vectors in opposite directions to generate a highly turbulent region in the vicinity of an orifice 120 from each of a multiple of fuel passages 122 within the fuel conduits 106 and central nozzle body 102. For example, the multiple of first swirl vanes 110 generate annular swirled flow in a clockwise direction and the multiple of second swirl vanes 112 generate annular swirled flow in a counter-clockwise direction, or vice versa. The highly turbulent region facilitates the mixing of the radially injected fuel but then the counter-swirling essentially cancel each other out to provide an essentially zero net swirl at an end 100A of the swirler body 100.

The fuel orifices 120 from each of the multiple of fuel passages 122 extend in a radial direction toward the highly turbulent region. The orifices 120 are axially located at a location L (Figure 4) approximately equivalent to a one-quarter (¼) auto-ignition time relative to an end 100A of the swirler body 100 or, described another way, the orifices 120 are located downstream of the splitter plate 108 at an axial distance greater than approximately five (5) diameters of one of the orifices 120, assuming that the orifices 120 are of equivalent diameters. If the orifices 120 are not of equivalent diameters, the five (5) diameter axial distance can be with regard to an average diameter of the orifices 120, smallest diameter of the orifices or largest diameter of the orifices, for example.

The given location L limits or essentially eliminates the potential for the fuel/air mixture to auto-ignite within the premixer 86. High-efficiency engines may operate at high pressure ratios, and may have high combustor inlet temperatures. These high temperatures can lead to reduced auto-ignition times, which represent a practical limit to the residence time of the fuel/air mixture in the premixer 86. However, the given location L that corresponds to a one-quarter (¼) auto-ignition ensures that the residence time is well below the auto-ignition time.

The fuel-air premixer 86 achieves effective fuel/air mixing through injection of the fuel jets F into the high-shear region R where the counter-swirling air flows meet. This mixing layer is characterized by high levels of turbulence, which operate to further atomize the fuel into small droplets and to disperse those droplets through the swirler body 100. Small droplets evaporate quickly, and once the fuel has been vaporized, the turbulent air flow acts to mix the fuel vapor with the air.

The fuel-air premixer 86 efficiently mixes liquid fuel with air by the end of the swirler body 100 to enable low pollutant emissions through minimization of lean or rich excursions from the design fuel/air ratio that would lead to higher emissions. The liquid fuel is mostly vaporized by the end 100A of the premixer 86, especially at high power operating conditions to improve mixing and reduce pollutant. The mixing of the fuel and air generated by the swirl vanes 110 and 112 also limits or eliminates flame "flash back" into the premixer 86. That is, the highly turbulent region in the vicinity of the orifice 120 from the fuel passages 122 within the fuel conduits 106 and central nozzle body 102 and cancellation of the counter-swirling to provide an essentially zero net swirl at an end 100A of the swirler body 100 limit or eliminate regions of low or negative velocity that would otherwise allow the flame to propagate from the combustor upstream into the premixer, where significant damage may be the result.

The premixer 86 is also relatively uncomplicated to manufacture, simple and scaleable as many low-emissions combustor designs use a large number of premixers in a staged array.

It should be understood that relative positional terms such as "forward," "aft," "upper," "lower," "above," "below," and the like are with reference to the normal operational attitude of the vehicle and should not be considered otherwise limiting.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A fuel-air premixer (86) for a combustor (26) of a turbine engine (20) comprising:
a central passage (114) along an axis (P), said central passage (114) operable to communicate an unswirled airflow;
an outer annular passage (116) around said axis (P), said outer annular passage (116) including a multiple of first swirl vanes (110) operable to communicate a first swirled airflow in a first direction;
an inner annular passage (118) around said axis (P) between said central passage (114) and said outer annular passage (116), said inner annular passage (118) including a multiple of second swirl vanes (112) operable to communicate a second swirled airflow in a second direction different than said first direction; and
a swirler body (100) extending around said outer annular passage (116), said inner annular passage (118), and said central passage (114), wherein said multiple of first swirl vanes (110) extend between said swirler body (100) and a splitter plate (108), said multiple of second swirl vanes (112) extend between said splitter plate (108) and a central nozzle body (102) that defines said central passage (114), and said swirler body (100) radially contracts downstream of said central nozzle body (102),
**characterised in that**:
said central nozzle body (102) includes a multiple of fuel passages (122) disposed radially outboard and parallel to said central passage (114).

2. The fuel-air premixer as recited in claim 1, wherein said multiple of first swirl vanes (110) and said multiple of second swirl vanes (112) define respective chord directions C1 and C2 that are transverse to said axis (P) and to each other.

3. The fuel-air premixer as recited in claim 1 or 2, wherein said multiple of fuel passages (122) include respective fuel orifices (120) that each extend in a radial direction.

4. The fuel-air premixer as recited in claim 3, wherein said fuel orifices (120) are located downstream of said splitter plate (108), optionally at an axial distance greater than approximately five (5) diameters of said fuel orifices (120).

5. The fuel-air premixer as recited in any preceding claim, wherein said swirler body (100) is axially spaced from said central nozzle body (102).

6. A gas turbine engine (20) comprising:
a compressor section (24);
a combustor (26) in fluid communication with said compressor section (24); and
a turbine section (28) in fluid communication with said combustor (26),
said combustor (26) including fuel-air premixer (86) according to any preceding claim.

7. A method of communicating fuel and air to a combustor (26) of a turbine engine (20) comprising:
communicating an unswirled airflow along an axis (P);
communicating a first swirled airflow in a first direction around the unswirled airflow;
communicating a second swirled airflow in a second direction different than the first direction forming a turbulent region; and
injecting fuel into the turbulent region.
**characterised in that** the fuel is injected from a central nozzle body (102) including a multiple of fuel passages (122), said fuel passages (122) disposed radially outboard and parallel to a central passage (114) communicating said unswirled airflow.

8. The method as recited in claim 7, further comprising radially injecting the fuel outward relative to the axis into the turbulent region at a location approximately equivalent to a one-quarter auto-ignition time relative to an end of a swirler body (100).

9. The method as recited in claim 7 or 8, further comprising choking the unswirled airflow, the first swirled airflow and the second swirled airflow downstream of the turbulent region.

10. The method as recited in any of claims 7, 8 or 9, further comprising providing essentially zero net swirl at an end of a swirler body (100) that receives the unswirled airflow, the first swirled airflow and the second swirled airflow.

## Patentansprüche

1. Kraftstoff-Luft-Vormischer (86) für eine Brennkammer (26) eines Turbinenmotors (20), umfassend:
einen mittigen Kanal (114) entlang einer Achse (P), wobei der mittige Kanal (114) dazu betreibbar ist, mit einem unverwirbelten Luftstrom zu kommunizieren;
einen äußeren ringförmigen Kanal (116) um die Achse (P), wobei der äußere ringförmige Kanal (116) eine Vielzahl von ersten Verwirbelungsschaufeln (110) beinhaltet, die dazu betreibbar sind, einen ersten verwirbelten Luftstrom in einer ersten Richtung zu kommunizieren;
einen inneren ringförmigen Kanal (118) um die Achse (P) zwischen dem mittigen Kanal (114) und dem äußeren ringförmigen Kanal (116), wobei der innere ringförmige Kanal (118) eine Vielzahl von zweiten Verwirbelungsschaufeln (112) beinhaltet,
die dazu betreibbar sind, einen zweiten verwirbelten Luftstrom in einer zweiten Richtung, die sich von der ersten Richtung unterscheidet, zu kommunizieren; und
einen Verwirblerkörper (100), der um den äußeren ringförmigen Kanal (116), den inneren ringförmigen Kanal (118) und den mittigen Kanal (114) verläuft, wobei die Vielzahl von ersten Verwirbelungsschaufeln (110) zwischen dem Verwirblerkörper (100) und einer Teilerplatte (108) verläuft, wobei die Vielzahl von zweiten Verwirbelungsschaufeln (112) zwischen der Teilerplatte (108) und einem mittigen Düsenkörper (102), der einen mittigen Kanal (114) definiert, verläuft, und der Verwirblerkörper (100) sich radial stromabwärts von dem mittigen Düsenkörper (102) zusammenzieht,
**dadurch gekennzeichnet, dass**:
der mittige Düsenkörper (102) eine Vielzahl von Kraftstoffkanälen (122) beinhaltet, die radial außerhalb des und parallel zu dem mittigen Kanal (114) angeordnet sind.

2. Kraftstoff-Luft-Vormischer nach Anspruch 1, wobei die Vielzahl von ersten Verwirbelungsschaufeln (110) und die Vielzahl von zweiten Verwirbelungsschaufeln (112) entsprechende Sehnenrichtungen C1 und C2 definieren, die zu der Achse (P) und zueinander quer verlaufen.

3. Kraftstoff-Luft-Vormischer nach Anspruch 1 oder 2, wobei die Vielzahl von Kraftstoffkanälen (122) entsprechende Kraftstofföffnungen (120) beinhaltet, die jeweils in einer radialen Richtung verlaufen.

4. Kraftstoff-Luft-Vormischer nach Anspruch 3, wobei sich die Kraftstofföffnungen (120) stromabwärts von der Teilerplatte (108) befinden, optional in einem axialen Abstand größer als etwa fünf (5) Durchmesser der Kraftstofföffnungen (120) .

5. Kraftstoff-Luft-Vormischer nach einem der vorhergehenden Ansprüche, wobei der Verwirblerkörper (100) axial von dem mittigen Düsenkörper (102) beabstandet ist.

6. Gasturbinenmotor (20), umfassend:
einen Verdichterabschnitt (24);
eine Brennkammer (26) in Fluidkommunikation mit dem Verdichterabschnitt (24); und
einen Turbinenabschnitt (28) in Fluidkommunikation mit der Brennkammer (26),
wobei die Brennkammer (26) einen Kraftstoff-Luft-Vormischer (86) nach einem der vorhergehenden Ansprüche beinhaltet.

7. Verfahren zum Kommunizieren von Kraftstoff und Luft zu einer Brennkammer (26) eines Turbinenmotors (20), umfassend:
Kommunizieren eines unverwirbelten Luftstroms entlang einer Achse (P);
Kommunizieren eines ersten verwirbelten Luftstroms in einer ersten Richtung um den unverwirbelten Luftstrom;
Kommunizieren eines zweiten verwirbelten Luftstroms in einer zweiten Richtung, die sich von der ersten Richtung unterscheidet, wobei eine turbulente Region gebildet wird; und
Einspritzen von Kraftstoff in die turbulente Region.
**dadurch gekennzeichnet, dass** der Kraftstoff aus einem mittigen Düsenkörper (102) eingespritzt wird, beinhaltend eine Vielzahl von Kraftstoffkanälen (122), wobei die Kraftstoffkanäle (122) radial außerhalb des und parallel zu einem mittigen Kanal (114), der den unverwirbelten Luftstrom kommuniziert, angeordnet sind.

8. Verfahren nach Anspruch 7, ferner umfassend ein radiales Einspritzen des Kraftstoffs nach außen relativ zu der Achse in die turbulente Region an einer Stelle ungefähr äquivalent zu einem viertel Selbstzündungszeitpunkt relativ zu einem Ende eines Verwirblerkörpers (100).

9. Verfahren nach Anspruch 7 oder 8, ferner umfassend ein Drosseln des unverwirbelten Luftstroms, des ersten verwirbelten Luftstroms und des zweiten verwirbelten Luftstroms stromabwärts der turbulenten Region.

10. Verfahren nach einem der Ansprüche 7, 8 oder 9, ferner umfassend ein Bereitstellen von im Wesentlichen null Nettoverwirbelung an einem Ende eines Verwirblerkörpers (100), der den unverwirbelten Luftstrom, den ersten verwirbelten Luftstrom und den zweiten verwirbelten Luftstrom empfängt.

## Revendications

1. Dispositif de prémélange de carburant et d'air (86) pour une chambre de combustion (26) d'une turbine (20) comprenant :
un passage central (114) le long d'un axe (P), ledit passage central (114) étant utilisable pour communiquer un écoulement d'air non tourbillonnant ;
un passage annulaire externe (116) autour dudit axe (P), ledit passage annulaire externe (116) incluant une multitude de premières aubes de tourbillonnement (110) utilisables pour communiquer un premier écoulement d'air tourbillonnant dans une première direction ;
un passage annulaire interne (118) autour dudit axe (P) entre ledit passage central (114) et ledit passage annulaire externe (116), ledit passage annulaire interne (118) incluant une multitude de secondes aubes de tourbillonnement (112) utilisables pour communiquer un second écoulement d'air tourbillonnant dans une seconde direction différente de ladite première direction ; et
un corps de tourbillonnement (100) s'étendant autour dudit passage annulaire externe (116), dudit passage annulaire interne (118) et dudit passage central (114), dans lequel ladite multitude de premières aubes de tourbillonnement (110) s'étendent entre ledit corps de tourbillonnement (100) et une plaque séparatrice (108), ladite multitude de secondes aubes de tourbillonnement (112) s'étendent entre ladite plaque séparatrice (108) et un corps de buse central (102) qui définit ledit passage central (114), et ledit corps de tourbillonnement (100) se contracte radialement en aval dudit corps de buse central (102),
**caractérisé en ce que** :
ledit corps de buse central (102) inclut une multitude de passages de carburant (122) disposés radialement à l'extérieur dudit passage central (114) et parallèlement à celui-ci.

2. Dispositif de prémélange de carburant et d'air selon la revendication 1, dans lequel ladite multitude de premières aubes de tourbillonnement (110) et ladite multitude de secondes aubes de tourbillonnement (112) définissent des directions de corde respectives C1 et C2 qui sont transversales audit axe (P) et l'une à l'autre.

3. Dispositif de prémélange de carburant et d'air selon la revendication 1 ou 2, dans lequel ladite multitude de passages de carburant (122) incluent des orifices de carburant respectifs (120) qui s'étendent chacun dans une direction radiale.

4. Dispositif de prémélange de carburant et d'air selon la revendication 3, dans lequel lesdits orifices de carburant (120) sont situés en aval de ladite plaque séparatrice (108), facultativement à une distance axiale supérieure à environ cinq (5) diamètres desdits orifices de carburant (120).

5. Dispositif de prémélange de carburant et d'air selon une quelconque revendication précédente, dans lequel ledit corps de tourbillonnement (100) est axialement espacé dudit corps de buse central (102).

6. Turbine à gaz (20) comprenant :
une section de compresseur (24) ;
une chambre de combustion (26) en communication fluidique avec ladite section de compresseur (24) ; et
une section de turbine (28) en communication fluidique avec ladite chambre de combustion (26),
ladite chambre de combustion (26) incluant un dispositif de prémélange de carburant et d'air (86) selon une quelconque revendication précédente.

7. Procédé de communication de carburant et d'air à une chambre de combustion (26) d'une turbine (20) comprenant :
la communication d'un écoulement d'air non tourbillonnant le long d'un axe (P) ;
la communication d'un premier écoulement d'air tourbillonnant dans une première direction autour de l'écoulement d'air non tourbillonnant ;
la communication d'un second écoulement d'air tourbillonnant dans une seconde direction différente de la première direction formant une région turbulente ; et
l'injection de carburant dans la région turbulente,
**caractérisé en ce que** le carburant est injecté à partir d'un corps de buse central (102) incluant une multitude de passages de carburant (122), lesdits passages de carburant (122) étant disposés radialement à l'extérieur d'un passage central (114) communiquant ledit écoulement d'air non tourbillonnant et parallèlement à celui-ci.

8. Procédé selon la revendication 7, comprenant en outre l'injection de manière radiale du carburant vers l'extérieur par rapport à l'axe dans la région turbulente à un emplacement approximativement équivalent à un quart de temps d'auto-allumage par rapport à une extrémité d'un corps de tourbillonnement (100).

9. Procédé selon la revendication 7 ou 8, comprenant en outre l'obstruction de l'écoulement d'air non tourbillonnant, du premier écoulement d'air tourbillonnant et du second écoulement d'air tourbillonnant en aval de la région turbulente.

10. Procédé selon l'une quelconque des revendications 7, 8 ou 9, comprenant en outre la fourniture d'un tourbillonnement net sensiblement nul à une extrémité d'un corps de tourbillonnement (100) qui reçoit l'écoulement d'air non tourbillonnant, le premier écoulement d'air tourbillonnant et le second écoulement d'air tourbillonnant.
